# EUROPÄISCHE PATENTSCHRIFT

(11) **EP 1 419 351 B1**
(45) Veröffentlichungstag und Bekanntmachung des Hinweises auf die Patenterteilung: **25.03.2009**
(21) Anmeldenummer: 02794768.8
(22) Anmeldetag: 09.08.2002
(51) Int. Cl.: F25D 1/00

(54) **KÄLTEGERÄT UND BETRIEBSVERFAHREN FÜR EIN KÄLTEGERÄT**
REFRIGERATION DEVICE AND OPERATING METHOD FOR A REFRIGERATION DEVICE
APPAREIL REFRIGERANT ET PROCEDE D'EXPLOITATION D'UN APPAREIL REFRIGERANT

(30) Priorität: 14.08.2001 DE 10139834
(43) Veröffentlichungstag der Anmeldung: 19.05.2004
(73) Patentinhaber: BSH Bosch und Siemens Hausgeräte GmbH, 81739 München (DE)
(72) Erfinder: MAIER, Roland, 73450 Neresheim (DE); BECKER, Wolfgang, 89134 Blaustein (DE)
(86) Internationale Anmeldenummer: PCT/EP2002/008958
(87) Internationale Veröffentlichungsnummer: WO 2003/016798

(56) Entgegenhaltungen:
- EP-A- 0 949 468
- WO-A-00/71947
- WO-A-99/42770
- DE-A- 3 904 216
- US-A- 5 678 416

## Beschreibung

Die vorliegende Erfindung betrifft ein Kältegerät mit zwei durch in einem gemeinsamen Kältemittelkreis angeordnete Verdampfer gekühlten Temperaturzonen und ein Verfahren zum Betrieb eines solchen Kältegeräts.

Bei Kältegeräten gelangt durch Luftaustausch über Türöffnungen Feuchtigkeit in das Innere des Kältegeräts. Diese Feuchtigkeit schlägt sich an Flächen nieder, an denen der Taupunkt unterschritten wird. Bei höherwertig ausgestatteten Kältegeräten kommen vermehrt Glasplatten als Abstellflächen zum Einsatz, an denen sich niederschlagende Feuchtigkeit besonders auffällig sichtbar wird. Ebenso schlägt sich die Feuchtigkeit aber auch an kalter Ware nieder, die dadurch, z.B. wenn sie in Papier eingewickelt ist, unmittelbar beeinträchtigt werden kann. Diese Probleme treten vor allem in Regionen bzw. bei Wetterlagen mit hoher Luftfeuchte bei gemäßigten Temperaturen sowie bei hohen Umgebungstemperaturen, also allgemein hauptsächlich in subtropisch/mediterranem bis tropischem Klima auf. Um eine solche Betauung zu vermeiden bzw. zu begrenzen, werden vermehrt Ventilatoren in die Kühlräume von Kältegeräten eingebaut. Die von diesen erzeugten schnellen Luftströmungen reduzieren die Betauung.

Die durch einen solchen Ventilator erzeugten verstärkten Luftströmungen führen jedoch auch zu einer erhöhten Wärmeübergangszahl an den Oberflächen. So werden Wärme und Feuchtigkeit im Innern des Kühlraums schneller ausgetauscht, was zu einer an sich durchaus erwünschten gleichmäßigeren Verteilung der Temperatur und der Luftfeuchtigkeit im Kühlraum führt.

Die erhöhte Luftströmungsgeschwindigkeit verstärkt auch den Wärmeaustausch zwischen dem Kühlraum und dem zu dessen Kühlung vorgesehenen Verdampfer. D.h. die Verdampfungstemperatur des im Verdampfer zirkulierenden ein Kältemittels steigt, und die Kühlleistung des Verdampfers ist bei unveränderter Verdampfergeometrie größer als bei einem Kältegerät ohne Ventilator.

Dies führt zu Problemen, wenn ein Ventilator zum Verhindern des Betauens in einem Kältegerät mit zwei Temperaturzonen eingesetzt werden soll, bei dem die zwei Temperaturzonen durch in einem gemeinsamen Kältemittelkreis angeordnete Verdampfer gekühlt werden. Da beide Verdampfer von dem gleichen Kältemittelstrom nacheinander durchflossen werden, können sie, je nachdem, ob der Kältemittelkreislauf läuft oder nicht, jeweils nur beide gleichzeitig kühlen bzw. nicht kühlen. Kältegeräte mit einem Kältemittelkreislauf und zwei unterschiedlichen Temperaturzonen werden im allgemeinen nur durch einen Thermostaten in einer der Zonen geregelt. Dieser befindet sich normalerweise in der Zone mit der höheren Temperatur. Die Temperatur in der zweiten, kälteren Zone hängt dann zwangsläufig von der Thermostateinstellung bzw. von der Laufzeit des Kältemittelkreislaufs ab, die zur Einhaltung der gewünschten Temperatur in der ersten Zone notwendig ist. Durch geeignete Dimensionierung der Wärmetauscher kann die Temperatur in der zweiten Zone in gewissem Rahmen "eingestellt" werden, sie hängt aber in jedem Falle von der Laufzeit des Kältemittelkreislaufs ab, die zur Einhaltung der Solltemperatur in der ersten Temperaturzone notwendig ist. D.h. die Temperatur in der zweiten Zone wird von den gleichen Größen beeinflußt wie die in der ersten Zone und ist abhängig von der dort gewählten Thermostateinstellung. Zu den Einflußgrößen gehört neben der Bedienhäufigkeit und der Beladung im wesentlichen die Umgebungstemperatur. Bei niedrigen Umgebungstemperaturen reicht die Laufzeit des Kältemittelkreislaufs nicht mehr aus, um die tiefer temperierte Zone ausreichend mit Kälte zu versorgen.

Wenn nun in der Zone mit der höheren Temperatur ein Ventilator vorgesehen wird, so kann dem bei der Dimensionierung der Verdampfer Rechnung getragen werden, in dem entsprechend der Verbesserung der Wärmeaustauscheffizienz durch die Luftströmung die Abmessungen des Verdampfers der wärmeren Zone reduziert werden. Eine Lösung des oben geschilderten Problems bringt dies jedoch noch nicht. Vielmehr führt eine übermäßige Verkleinerung des Verdampfers zu dem zusätzlichen Problem, dass die effektive Kühlleistung durch Kühlgut beeinträchtigt werden kann, welches den Strömungsweg der Luft zwischen Ventilator und Verdampfer blockiert. Wenn dies geschieht, verlängern sich die Laufzeiten des Verdampfers, die zum Aufrechterhalten der Solltemperatur in der wärmeren Zone erforderlich sind, die kältere Zone wird unterkühlt, und der Energieverbrauch steigt an.

Um auch bei niedrigeren Umgebungstemperaturen die Temperaturen in beiden Temperaturzonen jeweils in einem Sollbereich zu halten, ist ein aus EP-0-959 311 bekannter Lösungsansatz, in der höher temperierten Zone ein Heizelement vorzusehen, das in dem Fall, dass eine in der tieferen Temperaturzone erfasste Temperatur einen vorgegebenen Grenzwert überschreitet, betrieben wird, um so künstlich einen zusätzlichen Wärmeeintrag in die Zone höherer Temperatur herbeizuführen, welcher dann dazu führt, dass der Kältemittelkreislauf in Gang gesetzt wird, um beide Zonen gemeinsam in einen gewünschten Temperaturbereich zu kühlen. Dieses Verfahren ist jedoch nicht vollauf befriedigend, da es zu einer erhöhten Leistungsaufnahme des Kältegerätes führt.

Ein weiteres Kältegerät gemaß dem Oberbegriff von Anspruch 1 und Anspruch 6 ist aus US 5678416 bekannt.

Aufgabe der vorliegenden Erfindung ist, ein Betriebsverfahren für ein Kältegerät und ein Kältegerät anzugeben, die den Betrieb eines Ventilators in einer Temperaturzone des Kältegerätes erlauben, ohne dass dafür die Abmessungen des Verdampfers in dieser Zone übermäßig reduziert werden müssen. Diese Aufgabe wird gelöst durch ein Verfahren mit den Merkmalen des Anspruchs 1 bzw. ein Kältegerät mit den Merkmalen des Anspruchs 7.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm eines Kältegeräts;
- Fig. 2: ein analoges Blockdiagramm eines Kältegeräts;
- Fig. 3: ein Zeitdiagramm, das Laufzeiten des Kältemittelkreislaufs und des Gebläses eines Kältegeräts gemäß Fig. 2 darstellt; und
- Fig. 4: ein Flussdiagramm eines von der Steuereinheit des Kältegeräts aus Fig. 2 durchgeführten Steuerverfahrens.

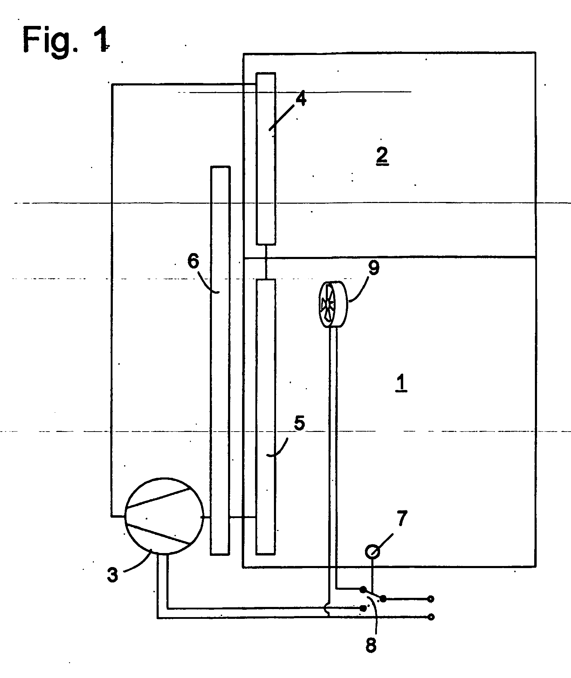

Fig. 1 ist eine schematische Darstellung eines Kombinations-Kältegerätes. Ein Kühlfach 1 und ein Gefrierfach 2 bilden zwei Temperaturzonen des Kältegeräts. Ein Kältemittelkreislauf umfasst einen Verdichter 3, der ein verdichtetes Kältemittel nacheinander durch zwei Verdampfer 4, 5 des Gefrierfachs 2 bzw. des Kühlfachs 1 pumpt, sowie einen Wärmetauscher 6, den das in den Verdampfern 4, 5 entspannte Kühlmittel durchläuft, bevor es wieder in den Verdichter 3 eintritt. Der Betrieb des Verdichters 3 ist durch einen Schalter 8 gesteuert, dessen Schaltstellung von einem im Kühlfach 1 angeordneten Temperatursensor 7 gesteuert ist. Der Schalter 8 weist zwei Schaltstellungen auf, wobei in einer der beiden Stellungen der Verdichter 3 mit Strom versorgt wird und in der anderen ein im Kühlfach 1 angeordnetes Gebläse 9. Durch den Schalter 8 ist sichergestellt, dass Verdichter 3 und Gebläse 9 niemals gleichzeitig, sondern exakt im Gegentakt laufen. Während der Kältemittelkreislauf läuft, treten im Kühlfach daher allenfalls durch Konvektion verursachte, langsame Luftströmungen auf, so dass die Effektivität des Verdampfers 5 die gleiche ist, wie wenn das Gebläse 9 nicht vorhanden wäre. Der Verdampfer 5 kann daher eine große Fläche aufweisen, und es besteht keine Gefahr, dass durch eine ungeschickte Verteilung von Kühlgut im Kühlfach 1 der Verdampfer 5 weitgehend blockiert und unwirksam gemacht wird. Andererseits läuft immer dann, wenn der Verdichter 3 ausgeschaltet ist, das Gebläse 9, so dass ein unerwünschtes Betauen von Ablageflächen und Kühlgut im Kühlfach 1 wirksam vermieden wird.

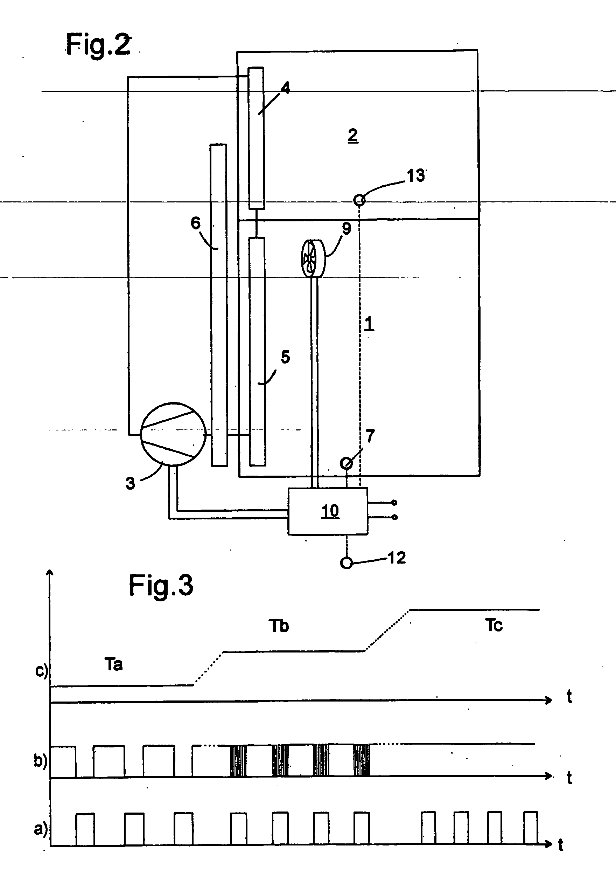

Bei der in Fig. 2 dargestellten Ausgestaltung eines Kältegeräts ist der Schalter 8 durch eine Steuereinheit 10 ersetzt. Diese Steuereinheit 10 nimmt zusammen mit einem im Kühlfach 1 angeordneten Temperatursensor 7 die Funktion des Thermostaten 7 und des Schalters 8 der Ausgestaltung aus Fig. 1 war. Zusätzlich ist die Steuereinheit 10 aber noch mit einem Außentemperatursensor 12 und oder einem Gefrierfach-Temperatursensor 13 verbunden. Da nicht beide Temperatursensoren 12, 13 gleichzeitig vorhanden sein müssen, sind die Verbindungen zwischen diesen Sensoren und der Steuereinheit 10 in der Fig. gestrichelt dargestellt.

Es wird zunächst die erfindungsgemäße Variante betrachtet, bei der der Kühlfachtemperatursensor 7 und der Außentemperatursensor 12 vorhanden sind.

Fig. 3 zeigt für diese Ausgestaltung schematisch Lauf- und Standphasen des Kältemittelkreislaufs (Zeile a) und des Gebläses (Zeile b) für drei unterschiedliche vom Sensor 12 erfasste Außentemperaturwerte Ta, Tb, Tc, dargestellt in Zeile c.

Im Falle einer niedrigen Außentemperatur Ta ist der Wärmeeintrag von außen in Kühl- und Gefrierfach gering, und die Zeitabstände zwischen aufeinanderfolgenden Laufphasen des Verdichters 3 sind relativ groß. Um in dieser Situation eine ausreichende Kühlung sätzlich durch Laufen des Gebläses 9 verkürzt werden. Gebläse und Verdichter laufen daher exakt im Gegentakt.

einanderfolgenden Laufphasen des Verdichters, und der Anteil der Verdichter-Laufphasen an der Gesamtbetriebszeit des Kältegeräts nimmt zu. Der Kühlungsbedarf des Gefrierfachs 2 nimmt aber nicht im gleichen Maße zu wie der des Kühlfachs, so dass bei einer zu langen Laufzeit des Verdichters die Gefahr einer Unterkühlung des Gefrierfachs 2 besteht. Diese Gefahr wird hier jedoch dadurch vermieden, dass während der Laufphasen des Verdichters 3 das Gebläse mit einem Tastverhältnis d ein- und ausgeschaltet wird, wobei der genaue Zahlenwert des Tastverhältnisses d von dem Wert der gemessenen Außentemperatur abhängt. Durch den zeitweiligen Gebläsebetrieb in den Laufphasen des Verdichters 3 verkürzen sich diese, so dass der Kälteeintrag in das Gefrierfach 2 einen geeigneten Wert annimmt.

Im Falle einer abermals höheren Außentemperatur Tc kann dieses Tastverhältnis d schließlich den Wert 1 erreichen, d.h. das Gebläse 9 läuft durchgehend, unabhängig davon, ob der Verdichter 3 läuft oder nicht.

Geeignete Werte für d als Funktion der Außentemperatur können experimentell ermittelt und z.B. in Form einer Tabelle in der Steuereinheit 10 abgespeichert sein.

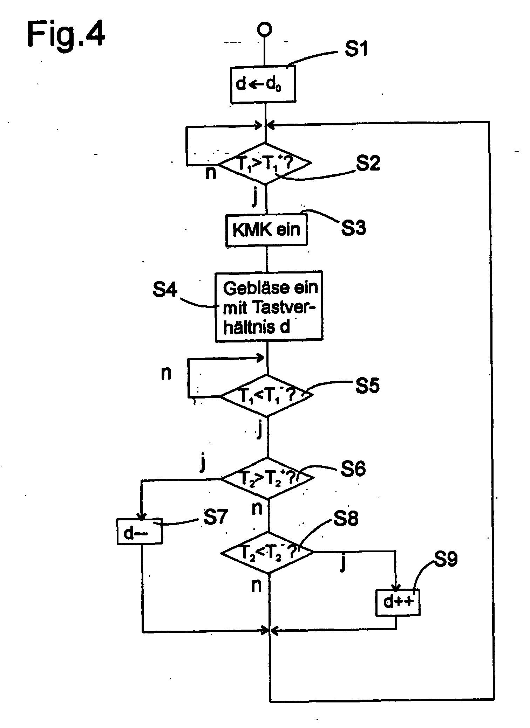

Ein alternatives, nicht erfindungsgemäßes Betriebsverfahren, das in einem Kältegerät mit GefrierfachTemperatursensor 13 durchführbar ist, wird anhand des Flussdiagramms von Fig. 4 beschrieben. Zunächst wird in Schritt S1 ein Startwert d₀ für das Tastverhältnis d festgelegt. Dieser Wert kann willkürlich gewählt sein, da er im Laufe des Betriebs des Kältegeräts gegen einen günstigen Wert konvergiert.

Wenn eine Überprüfung S2 der Kühlfachtemperatur T₁ ergibt, dass diese einen oberen Rand T₁⁺ eines zulässigen Temperaturintervalls überschreitet, so schaltet die Steuereinheit 10 den Kältemittelkreislauf ein (S3); gleichzeitig wird das Gebläse 9 mit dem festgelegten Tastverhältnis d betrieben (S4). Dies wird so lange fortgesetzt, bis eine Überprüfung S5 ergibt, dass die Temperatur T₁ die untere Grenze T₁⁻ des zulässigen Temperaturintervalls des Kühlfachs 1 erreicht oder unterschritten hat.

Anschließend wird geprüft, ob auch die Temperatur T₂ des Gefrierfachs 2 im zulässigen Intervall liegt. Ist dessen obere Grenze T₂⁺ überschritten (S6), so zeigt dies, dass das Gefrierfach 2 nicht ausreichend mit Kälte versorgt wird, und dass daher längere Laufzeiten des Kältemittelkreislaufs wünschenswert wären. Folglich wird in Schritt S7 das Tastverhältnis d dekrementiert, um genau dies zu erreichen. Stellt sich umgekehrt in Schritt S8 heraus, dass die Temperatur T₂ die untere Grenze T2 des zulässigen intervalls unterschreitet, so wird in Schritt S9 das Tastverhältnis d inkrementiert. Wenn die Temperatur T₂ im Intervall [T₂⁻, T₂⁺] liegt, so ist das Tastverhältnis d korrekt und bleibt unverändert.

Anschließend kehrt die Steuerung zu Schritt S2 zurück. Auf diese Weise konvergiert im Verlauf mehrerer Laufphasen des Kältemittelkreislaufs das Tastverhältnis d gegen einen Wert, der eine angemessene Kühlung des Gefrierfachs gewährleistet, und wenn sich z.B. in Folge einer Veränderung der Umgebungstemperatur der Kühlungsbedarf des Gefrierfachs ändert, so wird das Tastverhältnis d diesem veränderten Bedarf automatisch angeglichen.

Die Schrittweite der Inkrementierung oder Dekrementierung in Schritt S9 bzw. S7 kann proportional zur Differenz zwischen T₂ und einer Temperatur im Intervall [T₂⁻, T₂⁺], z.B. (T2 +T₂⁺)/2, festgelegt werden, um so bei starken Sollabweichungen eine schnelle Konvergenz von d und bei kleinen Sollabweichungen eine feinfühlige Regelung, die nicht zu Oszillationen von d führt, zu erreichen.

Selbstverständlich ist es auch möglich, das Kältegerät sowohl mit dem Außentemperatursensor 12 als auch mit dem Gefrierfachtemperatursensor 13 auszustatten. Dies erlaubt es, jeweils für einzelne Werte der Außentemperatur eine Anpassung des Tastverhältnisses d mit dem in Fig. 4 gezeigten Verfahren durchzuführen und die so für unterschiedliche Außentemperaturen erhaltenen Werte des Tastverhältnisses in der Steuereinheit 10 zu speichern. So kann die Steuereinheit 10 bei einer Änderung der Außentemperatur jeweils, so bald diese erfasst wird, das für diese Außentemperatur angemessene Tastverhältnis d einstellen und auf diese Weise eine schnellere Regelung der Gefrierfachtemperatur erreichen.

## Patentansprüche

1. Verfahren zum Betreiben eines Kältegeräts mit zwei durch in einem gemeinsamen Kältekreislauf (3, 4, 5, 6) angeordnete Verdampfer (4, 5) gekühlten Temperaturzonen (1, 2), von denen eine erste (1) mit einem Gebläse (9) ausgerüstet ist, bei dem zum Halten der Temperaturen der Temperaturzonen (1, 2) in ihren jeweiligen Sollbereichen der Kältemittelkreislauf (3, 4. 5, 6) abhängig von einer in einer der Tamperaturzonen gemessenen Temperatur intermittierend betrieben wird, und dass das Gebläse (9) intermittierend betrieben wird, und dass Lauf- und Standphasen des Kältemittelkreistaufs (3, 4, 5, 5) und des Gebläses (9) so festgelegt werden, dass Laufphasen des Kältemittelkreislaufes (3, 4, 5, 6) wenigstens teilweise mit den Standphasen des Gebläses zusammenfallen, **dadurch gekennzeichnet, dass** der Anteil des Betriebszeit des Kältegerätes in dem Gebläse (9) und der Kältemittelkreislauf (3, 4, 5, 6) gleichzeitig laufen, in Abhängigkeit von der Umgebungstemperatur des Kältegerätes festgelegt wird.

2. Verfahren nach Anspruch 1, **dadurch gekennzeichnet, dass** ferner Laufphasen des Gebläses (9) wenigstens teilweise mit Standphasen des Kältemittelkreislaufs (3, 4, 5, 6) zusammenfallen.

3. Verfahren nach Anspruch 9 oder 2, **dadurch gekennzeichnet, dass** das Gebläse (9) nur in Standphasen des Kältemittelkreislaufs (3, 4, 5, 6) läuft.

4. Verfahren nach Anspruch 1, **dadurch gekennzeichnet, dass** der Anteil um so größer festgelegt wird, je höher die Umgebungstemperatur ist.

5. Verfahren nach einem der Ansprüche 1 bis 4, **dadurch gekennzeichnet, dass** die Dauer der Laufphasen des Kältemittelkreislaufs anhand einer in einer der Temperaturzonen (1) gemessenen Temperatur festgelegt wird, und dass der Anteil an der Betriebszeit des Kältegeräts, in dem Gebläse (9) und Kältemittelkreislauf (3, 4, 5, 6) gleichzeitig laufen, in Abhängigkeit von einer in der jeweils anderen Temperaturzone (2) gemessenen Temperatur festgelegt wird.

6. Verfahren nach Anspruch 5, **dadurch gekennzeichnet dass** die zweite Temperaturzone (2) einen niedrigeren Temperatur-Sollwert als die erste Temperaturzone (1) hat, und dass der Anteil um so kleiner festgelegt wird, je höher die in der zweiten Temperaturzone (2) gemessene Temperatur ist.

7. Kältegerät mit zwei durch in einem gemeinsamen Kältemittelkreislauf (3, 4, 5, 6) angeordnete Verdampfer (4, 6) gekühlten Temperaturzonen (1, 2), von denen eine erste (1) mit einem Gebläse (9) ausgerüstet ist, und einer Steuereinrichtung (8, 10), die zum Halten der Temperaturen der Temperaturzonen (1, 2) in ihren jeweiligen Sollbereichen den Kältemittelkreislauf (3, 4, 5, 6) abhängig von einer in einer der Temperaturzonen (1) gemessenen Temperatur intermittierend bebreibt, wobei die Steuereinrichtung (8, 10) das Gebläse (9) intermittierend betreibt, so dass Laufphasen des Kältemittelkreislaufs (3, 4, 6, 6) wenigstens teilweise mit Standphasen des Gebläses (9) zusammenfallen, **dadurch gekennzeichnet dass** die Steuereinrichtung (8, 10) derart eingerichtet ist, dass der Anteil der Betriebszeit des Kältegerätes, in dem Gebläse (9) und Kältemittelkreislauf (3, 4, 5, 6) gleichzeitig laufen in Abhängigkeit von der Umgebungstemperatur des Kältegerätes festgelegt wird.

8. Kältegerät nach Anspruch 7, **dadurch gekennzeichnet, dass** ein Sensor (12) zum Erfassen der Umgebungstemperatur des Kältegeräts mit der Steuereinrichtung (10) verbunden ist.

9. Kältegerät nach Anspruch 7 oder 8, **dadurch gekennzeichnet, dass** jeweils ein Sensor (7, 13) zum Erfassen der Temperatur in jeder der Temperaturzonen (1, 2) mit der Steuereinrichtung (10) verbunden ist.

## Claims

1. Method of operating a refrigerating appliance with two temperature zones (1, 2), which are cooled by evaporators (4, 5) arranged in a common refrigerating circuit (3, 4, 5, 6) and of which a first one (1) is equipped with a fan (9) by which for keeping the temperatures of the temperature zones (1, 2) in their respective target regions the refrigerant circuit (3, 4, 5, 6) is operated intermittently in dependence on a temperature measured in one of the temperature zones, and that the fan (9) is intermittently operated and that operating and standstill phases of the refrigerant circuit (3, 4, 5, 6) and of the fan (9) are so determined that operating phases of the refrigerant circuit (3, 4, 5, 6) at least partly coincide with the standstill phases of the fan, **characterised in that** the proportion of the operating time of the refrigerating appliance in which fan (9) and refrigerant circuit (3, 4, 5, 6) run simultaneously is determined in dependence on the ambient temperature of the refrigerating appliance.

2. Method according to claim 1, **characterised in that** in addition operating phases of the fan (9) at least partly coincide with standstill phases of the refrigerant circuit (3, 4, 5, 6).

3. Method according to claim 1 or 2, **characterised in that** the fan (9) runs only in standstill phases of the refrigerant circuit (3, 4, 5, 6).

4. Method according to claim 1, **characterised in that** the proportion is determined to be greater the higher the ambient temperature.

5. Method according to any one of claims 1 to 4, **characterised in that** the duration of the operating phases of the refrigerant circuit is determined on the basis of a temperature measured in one of the temperature zones (1) and that the proportion of the operating time of the refrigerating appliance in which the fan (9) and refrigerant circuit (3, 4, 5, 6) run simultaneously is determined in dependence on a temperature measured in the respective other temperature zone (2).

6. Method according to claim 5, **characterised in that** the second temperature zone (2) has a lower temperature target value than the first temperature zone (1) and that the proportion is determined to be smaller the higher the temperature measured in the second temperature zone (2).

7. Refrigerating appliance with two temperature zones (1, 2), which are cooled by evaporators (4, 5) arranged in a common refrigerant circuit (3, 4, 5, 6) and of which a first one (1) is equipped with a fan (9), and a control device (8, 10) which for keeping the temperatures of the temperature zones (1, 2) in their respective target ranges operates the refrigerant circuit (3, 4, 5, 6) intermittently in dependence on a temperature measured in one of the temperature zones (1), wherein the control device (8, 10) operates the fan (9) intermittently so that operating phases of the refrigerant circuit (3, 4, 5, 6) at least partly coincide with standstill phases of the fan (9), **characterised in that** the control device (8, 10) is equipped in such a manner that the proportion of the operating time of the refrigerating appliance in which the fan (9) and refrigerant circuit (3, 4, 5, 6) run simultaneously is determined in dependence on the ambient temperature of the refrigerating appliance.

8. Refrigerating appliance according to claim 7, **characterised in that** a sensor (12) for detecting the ambient temperature of the refrigerating appliance is connected with the control device (10).

9. Refrigerating appliance according to claim 7 or 8, **characterised in that** a respective sensor (7, 13) for detecting the temperature in each of the temperature zones (1, 2) is connected with the control device (10).

## Revendications

1. Procédé pour exploiter un appareil réfrigérant présentant deux zones de température (1, 2) refroidies par des évaporateurs (4, 5) situés dans un circuit de réfrigération commun (3, 4, 5, 6) et dont l'une première (1) est équipée d'un ventilateur (9), dans lequel le circuit de réfrigération (3, 4, 5, 6), pour maintenir les températures des zones de température (1, 2) dans leurs plages de consigne respectives, est exploité par intermittence en fonction d'une température mesurée dans l'une des zones de température, et le ventilateur (9) est exploité par intermittence et des phases de marche et d'arrêt du circuit de réfrigération (3, 4, 5, 6) et du ventilateur (9) sont déterminées de manière telle que des phases de marche du circuit de réfrigération (3, 4, 5, 6) coïncident au moins en partie avec les phases d'arrêt du ventilateur, **caractérisé en ce que** la fraction du temps d'exploitation de l'appareil réfrigérant pendant laquelle le ventilateur (9) et le circuit de réfrigération (3, 4, 5, 6) marchent simultanément est déterminée en fonction de la température ambiante de l'appareil réfrigérant.

2. Procédé selon la revendication 1, **caractérisé en ce que** des phases de marche du ventilateur (9) coïncident en outre au moins en partie avec des phases d'arrêt du circuit de réfrigération (3, 4, 5, 6).

3. Procédé selon la revendication 1 ou 2, **caractérisé en ce que** le ventilateur (9) ne marche que pendant des phases d'arrêt du circuit de réfrigération (3, 4, 5, 6).

4. Procédé selon la revendication 1, **caractérisé en ce que** la fraction est déterminée telle qu'elle est d'autant plus grande que la température ambiante est élevée.

5. Procédé selon l'une des revendications 1 à 4, **caractérisé en ce que** la durée des phases de marche du circuit de réfrigération est déterminée à l'aide d'une température mesurée dans l'une des zones de température (1) et **en ce que** la fraction du temps d'exploitation de l'appareil réfrigérant pendant laquelle le ventilateur (9) et le circuit de réfrigération (3, 4, 5, 6) marchent simultanément est déterminée en fonction d'une température mesurée dans l'autre zone de température respective (2).

6. Procédé selon la revendication 5, **caractérisé en ce que** la deuxième zone de température (2) a une valeur de consigne de la température plus basse que la première zone de température (1) et **en ce que** la fraction est déterminée telle qu'elle est d'autant plus faible que la température mesurée dans la deuxième zone de température (2) est élevée.

7. Appareil réfrigérant présentant deux zones de température (1, 2) refroidies par des évaporateurs (4, 5) situés dans un circuit de réfrigération commun (3, 4, 5, 6) et dont l'une première (1) est équipée d'un ventilateur (9), et un dispositif de commande (8, 10) qui, pour maintenir les températures des zones de température (1, 2) dans leurs plages de consigne respectives, fait fonctionner le circuit de réfrigération (3, 4, 5, 6) par intermittence en fonction d'une température mesurée dans l'une des zones de température (1), le dispositif de commande (8, 10) faisant fonctionner le ventilateur (9) par intermittence de sorte que des phases de marche du circuit de réfrigération (3, 4, 5, 6) coïncident au moins en partie avec des phases d'arrêt du ventilateur (9), **caractérisé en ce que** le dispositif de commande (8, 10) est aménagé de manière telle que la fraction du temps d'exploitation de l'appareil réfrigérant pendant laquelle le ventilateur (9) et le circuit de réfrigération (3, 4, 5, 6) marchent simultanément est déterminée en fonction de la température ambiante de l'appareil réfrigérant.

8. Appareil réfrigérant selon la revendication 7, **caractérisé en ce qu'**un capteur (12) de détection de la température ambiante de l'appareil réfrigérant est relié au dispositif de commande (10).

9. Appareil réfrigérant selon la revendication 7 ou 8, **caractérisé en ce que** respectivement un capteur (7, 13) de détection de la température dans chacune des zones de température (1, 2) est relié au dispositif de commande (10).
